# EUROPÄISCHE PATENTANMELDUNG

(11) **EP 3 085 841 A1**
(43) Veröffentlichungstag der Anmeldung: **26.10.2016**
(21) Anmeldenummer: 16159104.5
(22) Anmeldetag: 08.03.2016
(51) Int. Cl.: E03D 9/08, C02F 1/32

(54) **INTIMDUSCHE MIT UV-REINIGUNGSEINRICHTUNG**

(30) Priorität: 22.04.2015 DE 102015106221
(71) Anmelder: Duravit Aktiengesellschaft, 78132 Hornberg (DE)
(72) Erfinder: SANDER, Sebastian, 77796 Mühlenbach (DE); MANTEL, Ralf, 77756 Hausach (DE)
(74) Vertreter: Lindner Blaumeier Patent- und Rechtsanwälte

(57) **Zusammenfassung**

Sanitäreinrichtung, umfassend ein WC mit einem Becken sowie eine Duscheinrichtung umfassend eine ausfahrbare Düse zur Abgabe von Wasser, wobei eine der Düse (11) vorgeschaltete Wasserreinigungseinrichtung umfassend eine UV-Strahlung emittierende Strahlungseinrichtung (21) zum Reinigen des über die Düse (11) abgebbaren Wassers vorgesehen ist.

## Beschreibung

Die Erfindung betrifft eine Sanitäreinrichtung, umfassend ein WC mit einem Becken sowie eine Duscheinrichtung umfassend eine ausfahrbare Düse zur Abgabe von Wasser.

Sanitäreinrichtungen der beschriebenen Art umfassend ein WC sowie eine elektronische Duscheinrichtung erfreuen sich aus offensichtlichen Hygienegründen zunehmender Beliebtheit. Die Duscheinrichtung mit ihrer ausfahrbaren Düse ermöglicht die Abgabe von Wasser, das über die Düse in Richtung des Benutzers gesprüht wird. Da derartige Dusch-WCs einen sehr sensiblen Bereich der Körperhygiene ansprechen, kommt dem Thema "Wasserqualität" eine starke Bedeutung zu. Während im europäischen Raum primär Trinkwasser verwendet wird, sind in Ländern anderer Kontinente nicht immer ähnlich strenge Vorschriften an die Qualität des hierfür verwendbaren Wassers gesetzt.

Grundsätzlich sind, nicht zuletzt aus psychologischen Gründen, seitens des Nutzers hohe Ansprüche an die Wasserqualität gesetzt. Diese können jedoch nicht immer erfüllt werden, selbst bei Verwendung von Trinkwasser nicht, das, insbesondere bei längerer Standzeit, unter Umständen auch belastet sein kann.

Der Erfindung liegt damit das Problem zugrunde, eine Sanitäreinrichtung anzugeben, die demgegenüber verbessert ist.

Zur Lösung dieses Problems ist bei einer Sanitäreinrichtung der eingangs genannten Art erfindungsgemäß vorgesehen, dass eine der Düse vorgeschaltete Wasserreinigungseinrichtung umfassend eine UV-Strahlung emittierende Strahlungseinrichtung zum Reinigen des über die Düse abgebbaren Wassers vorgesehen ist.

Erfindungsgemäß wird das über die Düse zum Benutzer abgebbare Wasser gezielt gereinigt, indem es mit UV-Strahlung behandelt wird. Das gesamte Wasser, das zur Düse gelangt und über diese abgegeben wird, wird auf diese Weise behandelt, um es - selbst wenn es bereits von Haus aus Trinkwasserqualität hat - nochmals einer zusätzlichen Reinigung zu unterziehen und etwaige Verunreinigungen durch Keime zu beseitigen.

Die hierzu vorgesehene Strahlungseinrichtung ist in den Wasserzulauf zur Düse vorgeschaltet, das heißt, dass die Strahlungseinrichtung an einer geeigneten Position im Wasserzulauf angeordnet ist, so dass die von ihr emittierte UV-Strahlung das gesamte der Düse zuzuführende Wasservolumen behandeln kann.

Bevorzugt wird eine UV(C)-Strahlung emittierende Strahlungseinrichtung verwendet. Diese Strahlungseinrichtung emittiert sehr intensive kurzwellige UV-Strahlung. Das behandelte Wasser wird aufgrund dieser Durchstrahlung nahezu keimfrei, eine Desinfektionsrate in der Größenordnung von 4 log-Stufen und darüber ist erreichbar.

Die erfindungsgemäße Sanitäreinrichtung lässt somit eine gezielte Wasserbehandlung und damit Verbesserung des Reinheitsgrads des zur Körperhygiene verwendeten Wassers zu.

Gemäß einer ersten Alternative bezüglich der Anordnung der Strahlungseinrichtung kann vorgesehen sein, dass diese in oder an einer Wasserleitung, durch die das über die Düse abgebbare Wasser strömt, angeordnet ist. Das über die Düse abgebbare Wasser wird zwangsläufig über eine entsprechende Leitung zugeführt. In oder an dieser ist nun die Strahlungseinrichtung angeordnet, so dass sichergestellt ist, dass die emittierte UV-Strahlung auch das gesamte Wasservolumen bestrahlt. Als "Wasserleitung" in diesem Zusammenhang ist entweder eine feste oder flexible, rohr- oder schlauchförmige Leitung zu verstehen, oder ein in eine solche oder an eine solche angeschlossenes Gehäuse, in dem die Strahlungseinrichtung angeordnet ist, und durch welches zwangsläufig das Waser geleitet wird.

Bevorzugt befindet sich die Strahlungseinrichtung in oder an einer im Inneren eines Gehäuses der Duscheinrichtung vorgesehenen Wasserleitung. Die Strahlungseinrichtung ist also in die Duscheinrichtung integriert. Die Duscheinrichtung weist üblicherweise ein Gehäuse auf, das sie nach außen hin abdeckt, und in welchem die zentralen Komponenten wie die ausfahrbare Düse, eine Heizeinrichtung, eine Pumpe, gegebenenfalls ein Tank, sowie eine Steuerungseinrichtung etc. integriert sind. Der Duscheinrichtung wird das über die Düse abgebbare Waser von extern zugeführt. Innerhalb der Duscheinrichtung wird es natürlich über entsprechende Leitungsabschnitte verteilt und geführt. In oder an einem solchen Leitungsabschnitt ist die Strahlungseinrichtung angeordnet, entweder unmittelbar in dem Leitungsabschnitt, oder in Form eines separaten Gehäuses, wie zuvor beschrieben, das in oder an eine solche Wasserleitung respektive einen solchen Leitungsabschnitt angeschlossen ist. Die Wasserreinigung erfolgt also unmittelbar vor der Abgabe über die Düse, so dass sichergestellt ist, dass über die Düse stets gereinigtes Wasser abgegeben wird.

Die Duscheinrichtung umfasst üblicherweise ein den Wasserzulauf regulierendes Zulaufventil, das der Düse vorgeschaltet ist. Diesem Zulaufventil, üblicherweise einem über die duscheinrichtungsseitige Steuerungseinrichtung ansteuerbare Magnetventil, ist eine Wasserleitung nachgeschaltet, durch die das einströmende Wasser weitergeführt wird. Die Strahlungseinrichtung ist nun in oder an der Wasserleitung, dem Zulaufventil nachgeschaltet, angeordnet. Wird die Duscheinrichtung betätigt, so wird über deren Steuerungseinrichtung unter anderem ein Steuerimpuls an das Zulaufventil, wie beschrieben bevorzugt ein Magnetventil, gegeben, so dass dieses öffnet und neues Wasser nachfließen kann. Zeitgleich damit wird über die Steuerungseinrichtung auch die Strahlungseinrichtung aktiviert. Das heißt, dass das gesamte frisch nachfließende Wasser zwangsläufig strahlungsbehandelt wird und somit ausschließlich behandeltes Wasser zur Düse gelangt. Ist der Reinigungsvorgang beendet, so schließt das Zulaufventil wieder, die Strahlungseinrichtung deaktiviert. Da die Strahlungseinrichtung jedoch dem Zulaufventil, möglichst nahe, nachgeschaltet ist, ist sichergestellt, dass sich im Wasserlauf zwischen Zulaufventil und Düse ausschließlich gereinigtes Wasser befindet. Wird ein erneuter Duschvorgang initiiert, so ist auch das zu Beginn des Duschvorgangs abgegebene Wasser gereinigt.

Alternativ dazu, die Strahlungseinrichtung dem Zulaufventil nachzuschalten, ist es auch denkbar, sie dem Zulaufventil vorzuschalten, wobei möglichst wenig Abstand zwischen Strahlungseinrichtung und dem Zulaufventil gegeben sein sollten. Die Strahlungseinrichtung ist damit in oder an der Wasserleitung, über die frisches, nachströmendes Wasser zum Zulaufventil gelangt, angeordnet. Sie ist in möglichst geringem Abstand zur Ventilebene angeordnet, damit keine längere verkeimbare Strecke zwischen Strahlungseinrichtung und Zulaufventil gegeben ist. Wird der Duschvorgang initiiert, so öffnet auch hier das Zulaufventil, zeitgleich wird die Strahlungseinrichtung zugeschaltet. Wiederum gelangt damit nur gereinigtes Wasser über das Zulaufventil zur Düse. Bei Beendigung des Duschvorgangs wird das Zulaufventil wieder geschlossen, zeitgleich damit oder etwas zeitverzögert wird auch die Strahlungseinrichtung deaktiviert. Wiederum ist sichergestellt, dass zwischen Zulaufventil und Düse nur gereinigtes Wasser vorhanden ist.

Alternativ zur Integration der Strahlungseinrichtung in die Duscheinrichtung ist es denkbar, die Strahlungseinrichtung auch außerhalb der Duscheinrichtung in oder an einer zu dieser führenden, in einem Hohlraum des WCs geführten Wasserleitung anzuordnen. Wie beschrieben wird das frische zuströmende Wasser über eine üblicherweise von der Wand kommende Wasserleitung zugeführt. Insbesondere bei einem wandhängenden WC ist es möglich, die Wasserleitung von hinten in einen Hohlraum des WCs zu führen und durch eine geeignete Durchbrechung von unten zur auf das WC rückseitig aufgesetzten Duscheinrichtung zu verlegen. Erfindungsgemäß kann nun die Strahlungseinrichtung in oder an dieser Wasserleitung angeordnet werden, das heißt, dass sie sich ebenfalls in einem Hohlraum des WCs befindet. Bevorzugt ist die Strahlungseinrichtung möglichst nah zur Duscheinrichtung gesetzt.

In einer weiteren Anordnungsalternative kann die Strahlungseinrichtung in oder an einer hinter einer Vorwand geführten Wasserleitung angeordnet sein. In diesem Fall ist die Strahlungseinrichtung zur Duscheinrichtung beabstandet. Die Wasserleitung, in oder an der die Strahlungseinrichtung angeordnet ist, ist hinter einer Vorwand verlegt und läuft durch diese, bevorzugt von hinten in einen Hohlraum des WCs geführt, zur Duscheinrichtung. Am Eingang der Duscheinrichtung ist das Zulaufventil angeordnet. Mit Zuschalten der Duscheinrichtung wird das Zulaufventil geöffnet und, bevorzugt zeitlich etwas vorher oder zumindest zeitgleich damit, auch die Strahlungseinrichtung aktiviert. Das an dem Zulaufventil anstehende Wasser hat die Strahlungseinrichtung bereits im Rahmen des vorherigen Duschvorgangs passiert, ist also gereinigt, so dass wiederum gereinigtes Wasser auch zu Beginn des Duschvorgangs zur Düse strömt. Das nachströmende Wasser wird gleichermaßen über die Strahlungseinrichtung gereinigt. Aufgrund nicht gegebener oder minimaler Konvektion verbleibt das zwischen Strahlungseinrichtung und Zulaufventil anstehende Wasser gereinigt, da es wenn überhaupt nur zu vernachlässigbarer konvenktiver Vermischung des gereinigten Wassers hinter der Strahlungseinrichtung mit anstehendem Wasser vor der Strahlungseinrichtung kommt.

Diese Anordnung kann noch dadurch verbessert werden, wenn auch das den Wasserzulauf zur Duscheinrichtung regulierende Zulaufventil, also das angesprochene Magnetventil, hinter der Vorwand vorgesehen ist. Das heißt, dass sich sowohl Zulaufventil als auch Strahlungseinrichtung hinter der Vorwand befindet. Die Strahlungseinrichtung ist dem Zulaufventil entweder nachgeschaltet, bevorzugt unmittelbar hinter dem Zulaufventil positioniert. Oder sie ist dem Zulaufventil, bevorzugt unmittelbar, vorgeschaltet. In jedem Fall wird sichergestellt, dass in dem Leitungsbereich zwischen Zulaufventil und Düse wiederum nur gereinigtes Wasser ansteht.

Eine weitere Anordnungsalternative zur Anordnung an oder in einer Wasserleitung sieht vor, die Strahlungseinrichtung in einem Wassertank, in dem das über die Düse abgebbare Wasser gespeichert ist, anzuordnen. Ein solcher Wassertank, der zur Verhinderung einer Rückverkeimung nach DIN-EN1717 eingesetzt wird, wird primär bei für den europäischen Markt vorgesehenen Duscheinrichtungen vorgesehen, er ist also Teil der Duscheinrichtung und im Duscheinrichtungsgehäuse integriert. Dieser Wassertank ist dem Zulaufventil stets nachgeschaltet, so dass kein ungeregelter Zulauf und damit auch kein Wasseraustausch möglich ist. Die Strahlungseinrichtung ist nun erfindungsgemäß in dem Wassertank angeordnet, durch das zwangsläufig das gesamte, der Düse zugeführte Wasser strömt. Auch hier ist sichergestellt, dass das der Düse zugeführte Wasser stets strahlungsbehandelt ist.

Wie beschrieben kann der Wassertank im Inneren des Gehäuses der Duscheinrichtung angeordnet sein, ihm ist das Zulaufventil vorgeschaltet. Alternativ ist es aber auch denkbar, den Wassertank hinter einer Vorwand anzuordnen. In diesem Fall ist zweckmäßigerweise auch das Magnetventil hinter der Vorwand angeordnet und dem Wassertank vorgeschaltet.

Im Wassertank selbst ist zweckmäßigerweise eine Freiluftstrecke zwischen einer Wasserzulauföffnung und dem Wasserspiegel gegeben, die üblicherweise zwei oder mehr Zentimeter beträgt. Die Strahlungsquelle ihrerseits ist im Wasser, also unterhalb des Wasserspiegels, angeordnet. Hierüber kann eine doppelte Sicherheit erreicht werden. Einerseits befindet sich die Strahlungseinrichtung im Wasser, das Wasser im Wassertank wird unmittelbar abgezogen und schließlich der Düse zugeführt. Darüber hinaus kann es über die Freiluftstrecke auch kein Keim zurückspringen, so dass über die Freiluftstrecke eine nachträgliche Verkeimung ausgeschlossen ist. Da das Zulaufventil dem Wassertank vorgeschaltet ist, ist auch kein Nachströmen möglich.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer erfindungsgemäßen Sanitäreinrichtung,
- Fig. 2: eine Prinzipdarstellung einer Duscheinrichtung als Teil der Sanitäreinrichtung aus Fig. 1, in einer ersten Ausführungsform,
- Fig. 3: eine Prinzipdarstellung einer Duscheinrichtung als Teil einer erfindungsgemäßen Sanitäreinrichtung aus Fig. 1, in einer zweiten Ausführungsform,
- Fig. 4: eine Prinzipdarstellung einer erfindungsgemäßen Sanitäreinrichtung einer zweiten Ausführungsform in Vorwandmontage, und
- Fig. 5: eine Prinzipdarstellung einer erfindungsgemäßen Sanitäreinrichtung einer weiteren Ausführungsform, ebenfalls in Vorwandmontage.

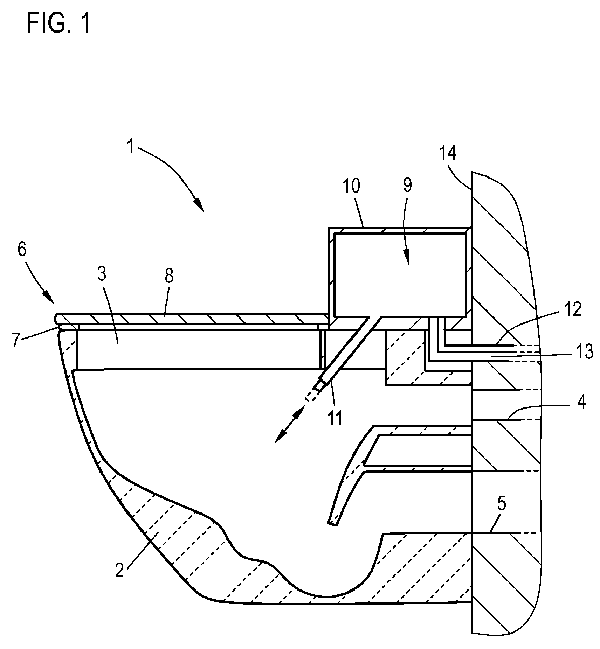

Fig. 1 zeigt eine erfindungsgemäße Sanitäreinrichtung 1, umfassend ein WC 2, das hier in der Prinzipdarstellung geschnitten dargestellt ist. Es besteht üblicherweise aus Keramik, Porzellan oder Metall und weist ein Becken 3 auf, in das über eine Spülwasserzuleitung 4 Spülwasser zuströmen kann, und aus dem über eine Abwasserleitung 5 Abwasser abgezogen wird.

Auf dem WC 2 ist in an sich bekannter Weise eine Sitz-Deckel-Kombination 6 angeordnet, wobei der Sitz 7 sowie der Deckel 8 schwenkbar gelagert sind. Im rückwärtigen WC-Bereich ist eine Duscheinrichtung 9 vorgesehen, die in einem Gehäuse 10 eingehaust ist, an dem beispielsweise der Sitz 7 und der Deckel 8 schwenkgelagert sind. Die Duscheinrichtung 9, die hier als reine Prinzipdarstellung gezeigt ist, umfasst eine in das Becken ausfahrbare Düse 11, über die in der Regel erwärmtes Wasser zur Reinigung an den Benutzer abgegeben werden kann.

Die Versorgungsleitungen, die zum Betrieb der Duscheinrichtung 9 benötigt werden, umfassen eine Stromleitung 12 sowie eine Wasserzuleitung 13, die im gezeigten Beispiel hinter einer Vorwand 14 verlegt sind und durch eine entsprechende Vorwandöffnung von hinten in das WC 2 geführt sind. Durch eine entsprechende, im WC-Korpus oberseitig vorgesehene Durchbrechung oder durch mehrere Durchbrechungen sind die Versorgungsleitungen 12, 13 von unten zur Duscheinrichtung 9 geführt und mit ihr entsprechend verbunden, wobei eine Verbindungsschnittstelle auch im Bereich des WC-Inneren liegen kann.

Der grundsätzliche Aufbau einer solchen Sanitäreinrichtung ist dem Grunde nach bekannt.

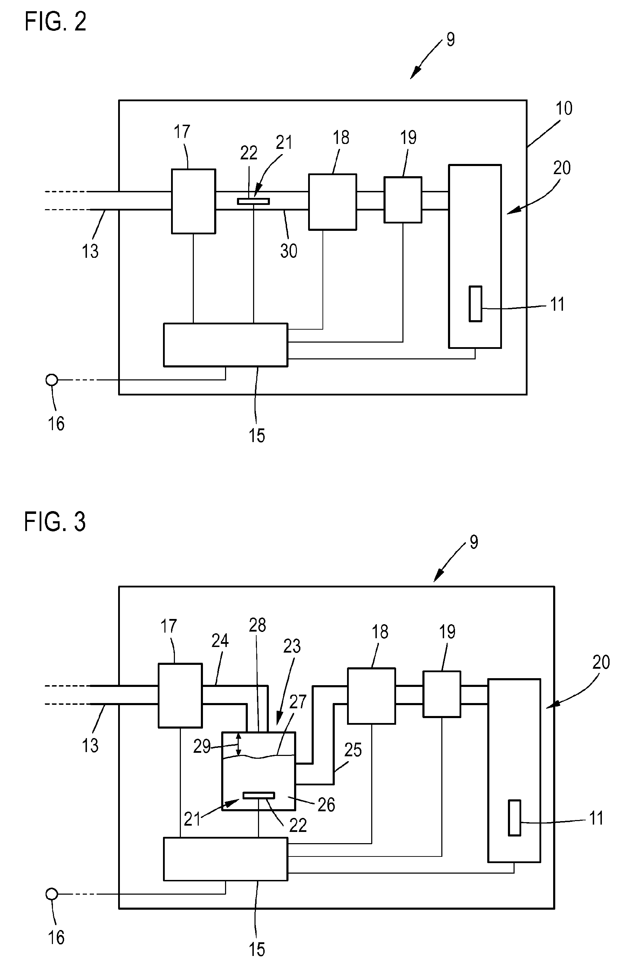

Um sicherzustellen, dass stets qualitativ hochwertiges, gereinigtes Wasser über die Düse 11 an den Benutzer abgegeben wird, ist erfindungsgemäß eine Wasserreinigungseinrichtung umfassend eine Strahlungseinrichtung vorgesehen, über die das der Düse 11 zugeführte Wasser strahlungsbehandelt wird, um etwaige vorhandene Keime zu töten. Die Figuren 2 - 4 zeigen verschiedene Ausgestaltungen der Sanitäreinrichtung, insbesondere in Bezug auf die Anordnung der Strahlungseinrichtung.

Fig. 2 zeigt eine Prinzipdarstellung der Duscheinrichtung 9 in ihrem Gehäuse 10. Die Duscheinrichtung 9 umfasst eine Steuerungseinrichtung 15, die den gesamten Betrieb der Duscheinrichtung 9 steuert und die mit einem Betätigungselement 16, beispielsweise eine Sensortaste oder dergleichen, die vom Benutzer zu Initiierung des Duschvorgangs zu betätigen ist, verbunden ist.

In die Duscheinrichtung 9 läuft, wie bereits beschrieben, eine Wasserzuleitung 13. Dieser nachgeschaltet ist ein Zulaufventil 17, beispielsweise ein Magnetventil, das über die Steuerungseinrichtung 15 gesteuert wird. Sobald das Bedienelement 16 betätigt wird, öffnet die Steuerungseinrichtung 15 das Zulaufventil 17, so dass das am Zulaufventil 17 anstehende Frischwasser durch das Magnetventil strömen kann.

Vorgesehen ist des Weiteren eine Pumpe 18, über die das Wasser gepumpt wird. Der Pumpe 18 nachgeschaltet ist exemplarisch eine Heizeinrichtung 19, bevorzugt ein einfacher Durchlauferhitzer, der dazu dient, das an den Benutzer abzugebende Wasser zu temperieren. Von der Heizeinrichtung 19 gelangt das erwärmte Wasser schließlich an die Düseneinrichtung 20 umfassend die ausfahrbare Düse 11, die, beispielsweise über den anstehenden Wasserdruck oder elektromechanisch gesteuert, sodann in das Beckeninnere ausfährt, wo das Wasser in Richtung des Benutzers abgegeben wird.

Vorgesehen ist des Weiteren eine Strahlungseinrichtung 21 in Form eines UV(C)-Strahlung abgebenden UV-Strahlers 22. Dieser ist in seinem Betrieb ebenfalls über die Steuerungseinrichtung 15 ansteuerbar. Mit Gabe des Initiierungssignals über das Bedienelement 16 wird zeitgleich oder gegebenenfalls sogar etwas vorher mit dem Öffnen des Zulaufventils 17 auch der UV-Strahler 22 aktiviert. Er emittiert UV(C)-Strahlung. An ihm vorbei strömt das gesamte Wasservolumen, das der Düse 11 zugeführt wird, so dass das gesamte, über die Düse 11 abgegebene Waser strahlungsbehandelt wird. UV(C)-Strahlung ist keimabtötend, das heißt, dass das hierüber behandelte Wasser nahezu vollständig antibakteriell ist.

Die Strahlungseinrichtung 21 ist in einer Wasserleitung 30 angeordnet, über die im gezeigten Beispiel das Zulaufventil 17 mit der Pumpe 18 verbunden ist. Die Strahlungseinrichtung 21 sollte in möglichst kurzem Abstand hinter dem Zulaufventil angeordnet sein.

Es ist festzuhalten, dass bei der Ausgestaltung gemäß Fig. 2 es grundsätzlich auch möglich wäre, die Strahlungseinrichtung 21 dem Zulaufventil 17 unmittelbar vorzuschalten und bevorzugt ebenfalls im Inneren des Gehäuses 10 anzuordnen. Mit Öffnen des Zulaufventils 17 wird gleichzeitig auch die Strahlungseinrichtung 21 aktiviert, so dass das über das Zulaufventil 17 strömende Wasser bereits gereinigt ist.

Auch könnte die Steuerungseinrichtung 21, bezogen auf die Ausgestaltung gemäß Fig. 2, außerhalb des Gehäuses 10, diesem jedoch möglichst nahe vorgeschaltet, an oder in die Wasserzuleitung 13 integriert sein. Die Strahlungseinrichtung 21 befindet sich dann in einem Hohlraum des WCs 2, in den von der Wand kommend die Wasserzuleitung 13 geführt ist, in die die Strahlungseinrichtung 21 gesetzt ist.

Fig. 3 zeigt eine weitere Ausführungsform einer Duscheinrichtung 9, wobei für gleiche Bauteile gleiche Bezugszeichen verwendet sind. Vorgesehen ist wiederum eine Steuerungseinrichtung 15 nebst Bedienelement 16, wie auch ein Zulaufventil 17, eine Pumpe 18, eine Heizeinrichtung 19 sowie die Düseneinrichtung 20 mit der ausfahrbaren Düse 11.

Zwischen Zulaufventil 17 und Pumpe 18 ist hier ein Wassertank 23 geschaltet. Ein Leitungsabschnitt 24, vom Zulaufventil 17 kommend, mündet oberseitig am Wassertank 23, vom Wassertank 23 läuft ein Leitungsabschnitt 25 zur Pumpe 18. Im Wassertank 23 steht über die Düse 11 abzugebendes Wasser 26. Zwischen dem Wasserspiegel 27 und der Mündungsöffnung 28 des Wasserleitungsabschnitts 24 ist eine Freiluftstrecke 29 gegeben, über die verhindert wird, dass in rückwärtiger Richtung eine Verkeimung in Richtung der Wasserzuleitung 13 möglich ist.

Bei dieser Erfindungsausgestaltung befindet sich die Strahlungseinrichtung 21, wiederum in Form des UV(C)-Strahlers 22, im Wassertank 23, und zwar im Wasser 26 selbst. Sämtliches der Düse 11 zugeführtes Wasser muss durch den Wassertank 23 strömen und wird folglich aufgrund der Integration der Strahlungseinrichtung 21 im Wassertank 23 zwangsläufig strahlungsbehandelt. Das heißt, dass das gesamte über die Pumpe 18 abgezogene Wasser antibakteriell ist.

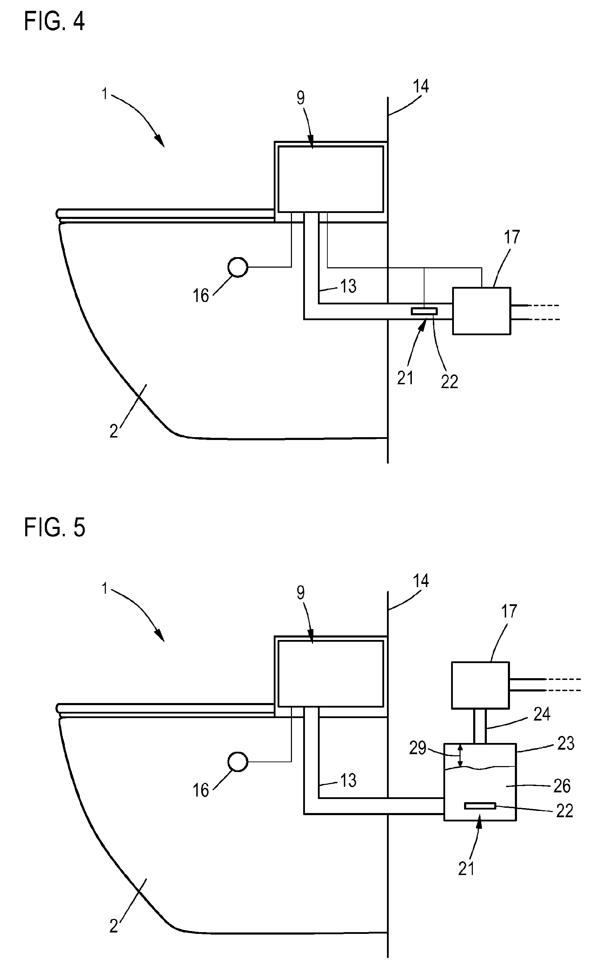

Fig. 4 zeigt eine weitere Ausführungsform einer erfindungsgemäßen Sanitäreinrichtung 1, wiederum umfassend ein hier nur vereinfacht dargestelltes WC 2, auf dem eine Duscheinrichtung 9 angeordnet ist. Gezeigt ist die Wasserzuleitung 13, die exemplarisch von der Vorwand 14 kommend durch einen Hohlraum im WC 2 an die Unterseite der Duscheinrichtung 9 geführt ist und in entsprechender Weise an ihr angeschlossen ist.

Anders als bei den zuvor beschriebenen Ausgestaltungen befindet sich das Zulaufventil 17 hier nicht in die Duscheinrichtung 9 integriert, sondern ist hinter die Vorwand 14 gesetzt. In die Wasserzuleitung 13 ist die Strahlungseinrichtung 21, also der UV(C)-Strahler 22, gesetzt. Die Strahlungseinrichtung 21 befindet sich ebenfalls hinter der Vorwand 14 und ist bevorzugt unmittelbar dem Zulaufventil 17 nachgeschaltet. Die Steuerung der Strahlungseinrichtung 21 sowie des Zulaufventils 17 erfolgt wiederum seitens der Steuerungseinrichtung 15 der Duscheinrichtung 9, wenn das Bedienelement 16 entsprechend betätigt wird. Da nach Beendigung des Duschvorgangs das Zulaufventil 17 geschlossen ist, ist folglich eine geschlossene Wasserstrecke zwischen dem Zulaufventil 17 und der Düse 11 gegeben. Da die Strahlungseinrichtung 21 in dieser Wasserstrecke angeordnet ist, nämlich unmittelbar hinter dem Zulaufventil 17, ist sichergestellt, dass sich in der gesamten Wasserstrecke nur gereinigtes, weil strahlungsbehandeltes Wasser befindet.

Fig. 5 zeigt schließlich eine weitere Ausführungsform einer Sanitäreinrichtung 1, wiederum umfassend das WC 2 sowie die Duscheinrichtung 9. Gezeigt ist die Wasserzuleitung 13, die durch das WC-Innere zur Duscheinrichtungsunterseite geführt ist.

Bei dieser Erfindungsausgestaltung ist hinter der Vorwand 14 wiederum das Zulaufventil 17 angeordnet, diesem nachgeschaltet ist hinter der Vorwand 14 ebenfalls der Wassertank 23, in den der Wasserleitungsabschnitt 24 von dem Zulaufventil 17 kommend mündet. Im Wassertank 23 ist wiederum die Strahlungseinrichtung 21, wiederum in Form des UV(C)-Strahlers 22, angeordnet. Über die Freistrecke 29 ist das im Wassertank 23 befindliche Waser 26 wiederum in Richtung des Zulaufventils 17 und damit der nachgeschalteten Wasserzuleitung getrennt.

Das Wasser 26 wird wiederum über die Pumpe 18, die bei diesem Beispiel in der Duscheinrichtung 9 angeordnet ist, gleichermaßen aber auch hinter der Vorwand 14, dem Wassertank 23 nachgeschaltet, verbaut sein kann, abgezogen und der Düse 11 zugeführt. Auch bei dieser Ausgestaltung ist sichergestellt, dass sich in der gesamten Wasserstrecke zwischen Zulaufventil 17 und der Düse 11 nur gereinigtes, weil über die Strahlungseinrichtung 21 strahlungsbehandeltes Wasser befindet.

Die Strahlungseinrichtung 21 ist bei den beschriebenen Ausführungsbeispielen als in die jeweilige Wasserleitung, integriert dargestellt. Selbstverständlich ist es denkbar, die Strahlungseinrichtung 21 mit einem eigenen, von zu reinigendem Wasser durchströmten Gehäuse zu versehen, in dem der UV(C)-Strahler 22 angeordnet ist. Dieses Gehäuse wird dann an entsprechender Position in die entsprechende Wasserleitung gesetzt respektive mit der vor- bzw. nachgeschalteten Komponente, z. B. dem Zulaufventil 17, verbunden.

Der gesamte Betrieb aller Komponenten wird wie beschrieben über die Steuerungseinrichtung 15 der Duscheinrichtung 9 gesteuert, wobei die einzelnen Komponenten natürlich über die Stromleitung 12 entsprechend versorgt werden, um arbeiten zu können. Die Stromleitung 12 ist aus Gründen der Übersichtlichkeit in den Prinzipdarstellungen 2 - 5 nicht näher gezeigt.

## Patentansprüche

1. Sanitäreinrichtung, umfassend ein WC mit einem Becken sowie eine Duscheinrichtung umfassend eine ausfahrbare Düse zur Abgabe von Wasser, **dadurch gekennzeichnet, dass** eine der Düse (11) vorgeschaltete Wasserreinigungseinrichtung umfassend eine UV-Strahlung emittierende Strahlungseinrichtung (21) zum Reinigen des über die Düse (11) abgebbaren Wassers vorgesehen ist.

2. Sanitäreinrichtung nach Anspruch 1, **dadurch gekennzeichnet, dass** die Strahlungseinrichtung (21) UV(C)-Strahlung emittiert.

3. Sanitäreinrichtung nach Anspruch 1 oder 2, **dadurch gekennzeichnet, dass** die Strahlungseinrichtung (21) in oder an einer Wasserleitung (13, 23), durch die das über die Düse (11) abgebbare Wasser strömt, angeordnet ist.

4. Sanitäreinrichtung nach Anspruch 3, **dadurch gekennzeichnet, dass** die Strahlungseinrichtung (21) in oder an einer im Inneren eines Gehäuses (10) der Duscheinrichtung (9) vorgesehenen Wasserleitung (23) angeordnet ist.

5. Sanitäreinrichtung nach Anspruch 4, **dadurch gekennzeichnet, dass** die Duscheinrichtung (9) ein den Wasserzulauf regulierendes Zulaufventil (17) umfasst, das der Düse (11) vorgeschaltet ist und dem die Wasserleitung (23) nachgeschaltet ist, wobei die Strahlungseinrichtung (21) in oder an der Wasserleitung (23) dem Zulaufventil (17) nachgeschaltet angeordnet ist.

6. Sanitäreinrichtung nach Anspruch 4, **dadurch gekennzeichnet, dass** die Duscheinrichtung (9) ein den Wasserzulauf regulierendes Zulaufventil (17) umfasst, das der Düse (11) vorgeschaltet ist und dem die Wasserleitung (13) vorgeschaltet ist, wobei die Strahlungseinrichtung (21) in der Wasserleitung (13) dem Zulaufventil (17) vorgeschaltet angeordnet ist.

7. Sanitäreinrichtung nach Anspruch 3, **dadurch gekennzeichnet, dass** die Strahlungseinrichtung (21) außerhalb der Duscheinrichtung (9) in oder an einer zu dieser führenden, in einem Hohlraum des WCs (2) geführten Wasserleitung (13) angeordnet ist.

8. Sanitäreinrichtung nach Anspruch 3, **dadurch gekennzeichnet, dass** die Strahlungseinrichtung (21) in oder an einer hinter einer Vorwand (14) geführten Wasserleitung (13) angeordnet ist.

9. Sanitäreinrichtung nach Anspruch 8, **dadurch gekennzeichnet, dass** ein den Wasserzulauf zur Duscheinrichtung (9) regulierendes Zulaufventil (17) vorgesehen ist, das hinter der Vorwand (14) vorgesehen ist, wobei die Strahlungseinrichtung (21) dem Zulaufventil (17) nach- oder vorgeschaltet angeordnet ist.

10. Sanitäreinrichtung nach Anspruch 1 oder 2, **dadurch gekennzeichnet, dass** die Strahlungseinrichtung (21) in einem Wassertank (23), in dem das über die Düse (11) abgebbare Wasser (26) gespeichert wird, angeordnet ist.

11. Sanitäreinrichtung nach Anspruch 10, **dadurch gekennzeichnet, dass** der Wassertank (23) im Inneren eines Gehäuses (10) der Duscheinrichtung (9) angeordnet ist.

12. Sanitäreinrichtung nach Anspruch 10, **dadurch gekennzeichnet, dass** der Wassertank (23) hinter einer Vorwand (14) angeordnet ist.

13. Sanitäreinrichtung nach einem der Ansprüche 10 bis 12, **dadurch gekennzeichnet, dass** im Wassertank (23) eine Freiluftstrecke (29) zwischen einer Wasserzulauföffnung (28) und dem Wasserspiegel (27) gegeben ist, wobei die Strahlungsquelle (21) im Wasser (26) angeordnet ist.
